(19) **Europäisches Patentamt / European Patent Office / Office européen des brevets**

(11) **EP 1 604 122 B1**

(12) **EUROPEAN PATENT SPECIFICATION**

(45) Date of publication and mention
of the grant of the patent:
**05.11.2008 Bulletin 2008/45**

(21) Application number: **04721887.0**

(22) Date of filing: **19.03.2004**

(51) Int Cl.:
*F15D 1/06* (2006.01)      *F15D 1/12* (2006.01)

(86) International application number:
**PCT/EP2004/002912**

(87) International publication number:
**WO 2004/083651 (30.09.2004 Gazette 2004/40)**

(54) **THREE DIMENSIONAL SURFACE STRUCTURE FOR REDUCED FRICTION RESISTANCE AND IMPROVED HEAT EXCHANGE**

DREIDIMENSIONALE OBERFLÄCHENSTRUKTUR FÜR REDUZIERTEN STRÖMUNGSWIDERSTAND UND VERBESSERTEN WÄRMEÜBERGANG

STRUCTURE DE SURFACE TRIDIMENSIONNELLE CONNUE POUR ASSURER UNE RESISTANCE AU FROTTEMENT REDUITE ET UN ECHANGE THERMIQUE AMELIORE

(84) Designated Contracting States:
**AT BE BG CH CY CZ DE DK EE ES FI FR GB GR HU IE IT LI LU MC NL PL PT RO SE SI SK TR**

(30) Priority: **19.03.2003 DE 20304444 U**
**03.06.2003 EP 03012638**

(43) Date of publication of application:
**14.12.2005 Bulletin 2005/50**

(73) Proprietor: **Vida, Nikolaus, Dr.**
**5332 Rekingen (CH)**

(72) Inventors:
• **VIDA, Nikolaus**
**5332 Rekingen (CH)**
• **KIKNADZE, Gennady Iraklievich**
**Moskau 123436 (RU)**
• **GACHECHILADZE, Ivan Alexandrovich**
**Moskau 129010 (RU)**

(74) Representative: **Herden, Andreas F.**
**Blumbach - Zinngrebe**
**Patentanwälte**
**Alexandrastrasse 5**
**65187 Wiesbaden (DE)**

(56) References cited:
**EP-A- 0 679 812**      **WO-A-97/04280**
**WO-A-20/04048871**      **DE-A- 19 840 303**
**GB-A- 547 791**      **US-A- 5 064 199**
**US-A- 5 080 367**

• **PATENT ABSTRACTS OF JAPAN vol. 1998, no. 06, 30 April 1998 (1998-04-30) & JP 10 047315 A (HIRATA JUNICHI), 17 February 1998 (1998-02-17)**

**Description**

The invention concerns in general surfaces along which media, e.g. gases, liquids or two-phase mixtures are flowing and especially surfaces as described in EP 92 911 873.5, PCT RU92/00106 or EP 96 927 047.9, PCT/EP96/03200 also termed TLT-reliefs or TLT-surfaces.

It is known that the process when a continuous medium like a gas, a liquid or a two-phase mixture flows along a surface covered with very special three-dimensional concave reliefs, named the TLT-reliefs and being described in more detail in EP 92 911 873.5, PCT RU92/00106 and in EP 96 927 047.9, PCT/EP96/03200, is accompanied by self-organization of secondary twisted tornado-like jets originating in each concavity of the relief and flowing out of it into the parent flow. A surface according to the preamble of claim 1 is known from US-A-5 064 199.

It is known that friction could be reduced by means of dimples located at said surface and that in addition heat transfer between said surface and the streaming media, e.g. gases, liquids and two-phase mixtures containing gases and liquids could be increased.
However, there are special situations in which there is minor interest in drag reduction and major interest in an increased heat transfer, as for instance for heat exchange devices as heat sinks in general, bonnets, chillers and many more. In addition, a huge number of devices demand for drag reduction as vehicles, aircrafts and ships in general. Moreover, any fluid transportation would benefit from a reduced drag resistance as this would decrease energy consumption or increase transportation speed.

Therefore it is an object of the invention to show a new way how the properties of a surface, especially concerning friction resistance and heat exchange with a surrounding medium, can be improved.

The object of the invention is achieved in a surprisingly simple manner by a subject matter of one of the attached independent claims. Advantageous embodiments and refinements are defined in the respective dependent claims.

The inventors surprisingly found that a certain geometry of the TLT-reliefs results in a significant improvement of the flow properties.

Accordingly the invention proposes a surface, which comprises dimples, wherein the edges of said dimples are rounded, thereby forming a central dimple area and at least one curvature area for each dimple, which continuously connects the dimple to the surrounding surface wherein said curvature area of the surface comprises at least a first curvature area and a second curvature area, the first curvature area having a different curvature than the second curvature area. Such a geometry of a surface especially improves the flow properties with respect to friction resistance as also with respect to heat and mass transfer for surfaces, along which a medium flows, which consists of a gas, a liquid, a two-phase mixture, or a mixture of multiple phases.

The underlying principle are secondary vortices, which originate in the dimples and lead to an organized transportation of medium from the surface to the main flow. Due to the reduced pressure inside the vortex flows the boundary layer is sucked in, so that the thickness of the boundary layer does not increase.

Said central dimple area preferably essentially has the form of a section of a sphere or an ellipsoid.

Preferably said first curvature area is rounded with a first rounding radius and said second curvature area is rounded with a second rounding radius.

As will also be seen later on, especially suitable for drag reduction, i.e. reduction of friction resistance, and related flow properties like reduced drag vortices and reduced lee waves, is a surface comprising dimples having a relatively low depth in relation to the diameter. In this regime it can be of special advantage to combine two different, consecutive curvature areas to realize different sizes of the central dimple area.

Also two curvature areas are very advantageous in order to achieve a gentle transition from the dimple to the surrounding surface, thereby reducing the probability of destruction of the advantageous secondary vortices, which originate in the dimples.

With advantage the dimples are arranged periodically on the surface. In order to realize a good coverage of the surface, the centers of three adjoining dimples preferably form a triangle, the distance between two neighboring dimples having a constant value $t_1$ and the distance between two rows of dimples having a constant value $t_2$.

The maximum coverage can be reached in this kind of arrangement when the curvature areas of said three adjoining dimples are in contact with each other.

Even in this arrangement a small area of flat surface remains in the center of three respective adjoining dimples. In this location preferably additional smaller-sized dimples are provided, by which the flow properties can be further improved.

The inventors also surprisingly found that there are regimes of significantly increased heat exchange and regimes of strongly reduced drag resistance.

Accordingly a surface, along which a medium flows, said medium consisting of a gas, a liquid, a two-phase mixture, or a mixture of multiple phases, with dimples having a diameter d and a depth h with a ratio between said depth and said diameter of $h/d \leq 0.1$, also lies within the scope of the invention. In this geometrical regime the surface shows an especially low friction resistance.

With a ratio of h/d ≥ 0.1 the surface shows an especially high heat transfer between said surface and said flowing medium.

The dimpled surfaces or reliefs with small relative depth of h/d ≤ 0.1, where h is the concavity depth and d is the concavity diameter, significantly reduce the friction resistance of the shaped surfaces, as well as intensify the heat and mass transfer, to a lesser extend, however, as compared with the friction resistance of a smooth surface.

The dimpled surfaces or reliefs with a larger relative depth of h/d ≥ 0,1 significantly intensify the heat and mass transfer with the aerohydrodynamic losses being constant or lagging behind the rate of intensification, with considerable disturbance of Reynolds in favorite to heat transfer.

Also within the scope of the invention lies a means for locomotion with at least one surface, along which a medium flows when said means for locomotion is in movement, wherein the at least one surface is provided with dimples as described above, in particular provided as a car, a truck, a train, an airplane, a helicopter or a ship.

In comparison to an otherwise identical means for locomotion or vehicle with a flat surface certain flow properties are improved, especially the drag resistance is reduced, the forming of drag vortices is reduced, the forming of lee waves is reduced, and the separation point of the flow is moved further downstream.

Further a device for transportation of a medium lies within the scope of the invention, which comprises at least one surface with dimples as described above. With advantage the surface with dimples is provided as an inner surface of a transport channel, in particular a pipe, of the device, in which the medium is transported. The implementation in such a device is of advantage due to a further result of the described surface structure found by the inventors, consisting in a reduced deposition of particles on the surface compared to a flat surface.

Further a device for heat exchange between a flowing medium and at least one surface of the device, in particular an air-conditioning system or part thereof, is proposed, wherein the at least one surface is provided with dimples. Here it can be taken advantage of the effect of reduced ice-forming on a surface, which comprises the described dimples, in comparison to a flat surface.

The invention further proposes a container for cooking and/or for keeping warm, wherein the outside surface of the bottom wall of the container and/or the outside surface of the side walls of the container comprise a surface with the described dimples.

Also a layer or coating for applying on a surface is proposed, which comprises a surface with the described dimples. By use of such a layer, a device or vehicle having a surface along which a medium flows can be upgraded for improved flow properties, such as reduced friction resistance or improved heat or mass transfer or a combination thereof.

For this purpose the layer can advantageously be provided with a first side and a second side, wherein said first side comprises dimples as described above and said second side comprises a self-adhesive coating.

Accordingly the invention proposes a method for producing a surface with reduced friction resistance and/or improved heat exchange with a surrounding medium, comprising the step of applying a described layer onto said surface.

Also a method is proposed for producing a surface with reduced friction resistance and/or improved heat exchange with a surrounding medium, which comprises the steps of

- providing a workpiece with at least one surface and
- imprinting into said at least one surface a structure comprising dimples.

Another inventive method for producing a surface with reduced friction resistance and/or improved heat exchange with a surrounding medium, comprises the steps of

- providing a casting mold with at least one structured surface and
- molding, in particular injection molding, of a workpiece with at least one surface comprising dimples by means of said casting mold.

  The invention is not limited to the described production methods, but shall also encompass any other method, which is suitable to produce a surface comprising the above described dimples.

  Also within the scope of the invention lies the usage of a surface with dimples as described above as a surface of
- a means for locomotion or
- a device for transportation of a medium or
- a device for heat exchange or
- a container for cooking and/or for keeping warm.

In the following the invention is described exemplary in more detail on the basis of preferred embodiments and with reference to the enclosed drawings. Therein same reference marks in the drawings indicate same or similar parts.

Brief Description of the Figures

It is shown in:

Fig. 1:     a schematic diagram of a distribution of dimples according to the prior art,

Fig. 2:     a schematic diagram of a cross section through a dimple according to the prior art,

Fig. 3:     a schematic diagram of a distribution of dimples according to the invention,

Fig. 4:     a schematic diagram of a cross section through a dimple according to a preferred embodiment,

Fig. 5:     a schematic diagram of a train with an inventive surface,

Fig. 6:     schematically a comparison of two wing profiles,

Fig. 7:     a schematic diagram of a container immersed in a flowing fluid,

Fig. 8:     schematically a transport channel, the inner surface of which being provided with dimples,

Fig. 9 :    a schematic diagram of a measurement arrangement for measuring the velocity profiles over different investigated plates comprising a laser Doppler anemometer (LDA),

Fig. 10:    a schematic diagram of a metal plate with TLT relieves or dimples,

Fig. 11:    a schematic diagram of a plate with variable TLT relieves or dimples,

Fig. 12:    a schematic diagram of a plate with TLT relieves showing the points, at which the velocity was measured.

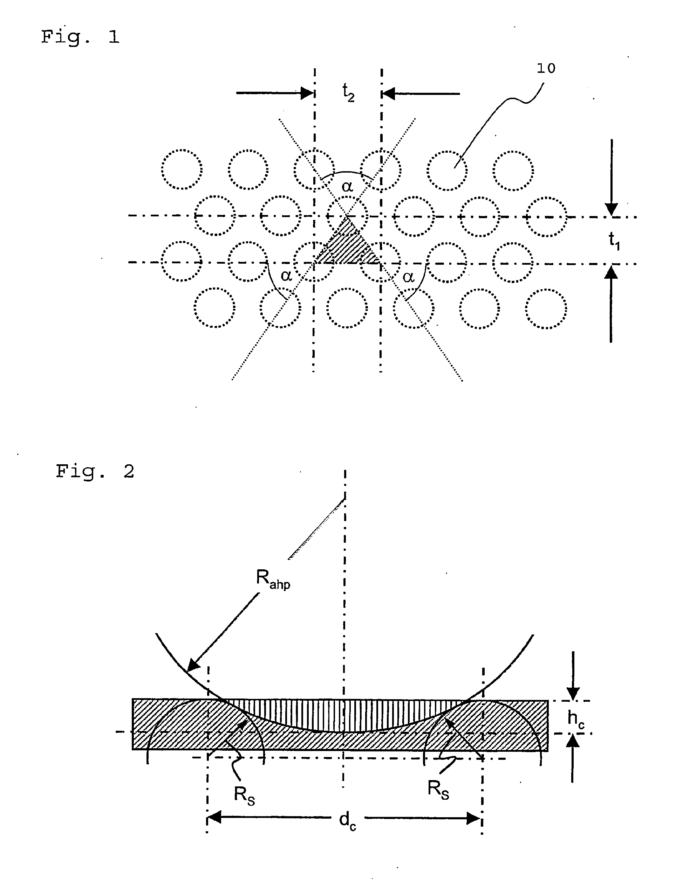

Fig. 1 shows schematically a distribution of dimples 10 on a surface according to the prior art. The dimples 10 are arranged periodically, wherein the centers of three directly adjoining dimples 10 form an equilateral triangle. The angle $\alpha$ therefore has a value of 60°. The distance between the centers of two adjoining dimples 10, which is equal to the length of a side of the triangle, has a constant value $t_1$. The distance between two rows of dimples 10, which equals the height of the triangle, has a constant value $t_2$. The parameters $t_1$ and $t_2$ can have different values depending on the purpose for which the surface shall be utilized.

Fig.2 shows a cross section through the center of one of the dimples 10 shown in Fig. 1, perpendicular to the surface. In this embodiment according to the prior art the dimple essentially has the form of a calotte with radius $R_{ahp}$, height $h_c$ and diameter $d_c$. Further the dimple 10 is rounded at the edges with a rounding radius $R_s$. Thereby in this example the dimple is symmetrical with respect to rotation around an axis through the center of the dimple and perpendicular to the surface.

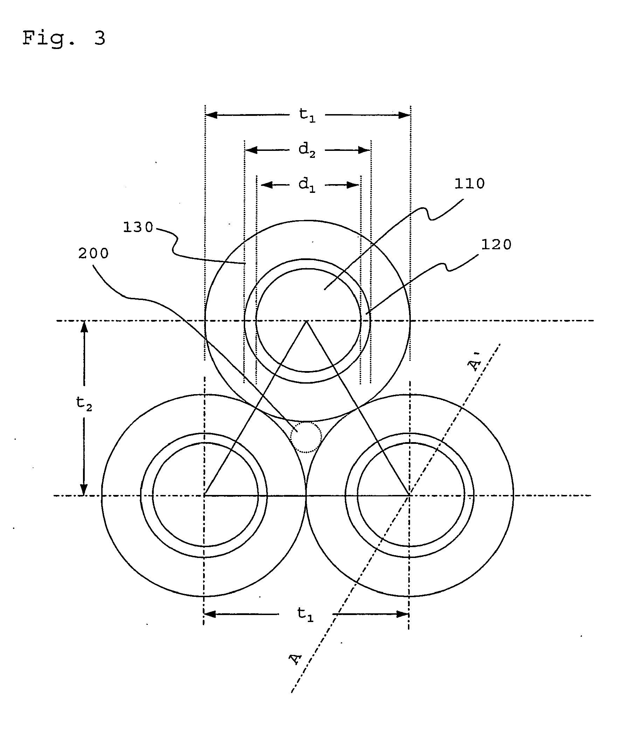

Fig. 3 shows schematically a top view of a distribution of dimples according to the invention comprising a central dimple area 110, a first curvature area 120 and a second curvature area 130, the named areas being arranged consecutively from the center of the dimple to the outside.

The central dimple area has a diameter of $d_1$, the first curvature area has an diameter of $d_2$ and the second curvature area has a diameter of $t_1$. The dimples are arranged similar to Fig. 1, but in this preferred embodiment the outer rims of two adjoining dimples are in contact with each other for a maximum surface coverage.

Again, the centers of three adjoining dimples form an equilateral triangle, the distance between the centers of two adjoining dimples having the constant value $t_1$ and the distance between two rows of dimples having the constant value $t_2$. In this embodiment therefore the diameter of the second curvature area equals the distance between two adjoining dimples $t_1$.

A small area of surface remains in the center between three adjoining dimples. In this location preferably additional smaller-sized dimples 200 can be provided, thereby further improving the flow properties of the surface.

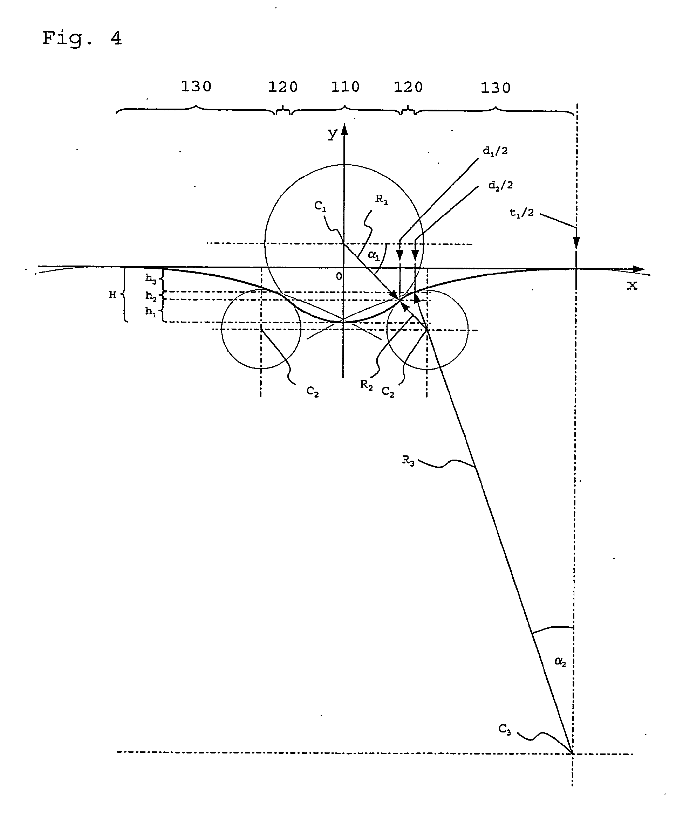

The cross section AA' through the center of a dimple perpendicular to the surface is shown in more detail in Fig. 4.

The central dimple area 110 essentially has the form of a section of a sphere, followed in the outward direction by two consecutive curvature areas. Since the curvature areas can be described as an arc, which is rotated in space, they have a surface formed as a part of a torus or similar thereto.

The form of the central dimple area, of the first curvature area and of the second curvature area in the shown cross section perpendicular to the surface and through the center of the dimple is defined by the following parameters:

$d_1$:         Diameter of the central dimple area,

$d_2$:         Outer diameter of the first curvature area,

$t_1$:         Outer diameter of the second curvature area,

$R_1, C_1$:    Radius and center point of the sphere, the section of which forms the surface of the central dimple area,

$R_2, C_2$:    Radius and center point of the rounding radius of the first curvature area,

$R_3, C_3$:    Radius and center point of the rounding radius of the second curvature area,

$P_1$:         Transition point from the central dimple area to the first curvature area,

$P_2$:         Transition point from the first curvature area to the second curvature area,

$P_3$:         Transition point from the second curvature area to the surrounding surface,

$h_1$:         Difference in height between the lowest point of the central dimple area and the outer rim of the central dimple

area,

h$_2$: Difference in height between the inner rim of the first curvature area and the outer rim of the first curvature area,

h$_3$: Difference in height between the inner rim of the second curvature area and the outer rim of the second curvature area,

$\alpha_1$: Angle between the y-axis and a line connecting C$_2$ and C$_3$ ,

$\alpha_2$: Angle between the x-axis and a line connecting C$_1$ and C$_2$,

f: Parameter related to the portion of the surface covered by the central dimple area in relation to the combined area of central dimple area and curvature areas.

H: Difference in height between the lowest point of the central dimple area and the outer rim of the second curvature area.

There is one point, in which the circle with radius R$_1$, being part of the sphere that forms the central dimple area, and the circle with radius R$_2$, defining the curvature of the first curvature area, have a mutual tangent. Further, there is another point, in which the circle with radius R$_2$ and the circle with radius R$_3$ have a mutual tangent.

To completely describe the form of the dimple a set of parameters, in particular the parameters d$_1$, $\alpha_1$, $\alpha_2$, R$_2$/R$_1$ and f, are chosen according to the necessities of the specific purpose the surface shall be used for and depending on whether drag reduction or improved heat exchange has priority. For most purposes the coverage of the surface by the central dimple areas lies below 70%, but also a greater coverage falls within the scope of the present invention.

The remaining of the named parameters can be calculated by means of the following equations:

$$R_1 = \frac{d_1}{2 \cdot \sin \alpha_1} \, ,$$

$$R_2 = \frac{R_2}{R_1} \cdot \frac{d_1}{2 \cdot \sin \alpha_1} \, ,$$

$$R_2 = \frac{t_1 - \frac{d_1}{2} \cdot \frac{R_2}{R_1} \cdot \frac{(1 - \sin \alpha_1)}{\sin \alpha_2}}{\sin \alpha_2} \, ,$$

$$h_1 = \frac{d_1}{2} \cdot \frac{(1 - \cos \alpha_1)}{\sin \alpha_1} \, ,$$

$$h_2 = R_2 \cdot (\cos \alpha_2 - \cos \alpha_1) \, ,$$

$$h_3 = R_3 \cdot (1 - \cos \alpha_2) \, ,$$

$$H = h_1 + h_2 + h_3 \, ,$$

$$t_1 = \sqrt{\frac{\pi}{6 \cdot f}} \cdot d_1 \, ,$$

$$C_1 = \left(X_{C1}, Y_{C1}\right) \text{ with } X_{C1} = 0 \, , \quad Y_{C1} = R_1 - H \, ,$$

$$C_2 = \left(X_{C2}, Y_{C2}\right) \text{ with } X_{C2} = \frac{d_1}{2} \cdot \left(1 + \frac{R_2}{R_1}\right) , \quad Y_{C2} = R_3 + \frac{X_{C3} - X_{C2}}{tg\,\alpha_2} \, ,$$

$$C_3 = \left(X_{C3}, Y_{C3}\right) \text{ with } X_{C3} = \frac{t_1}{2} \, , \quad Y_{C3} = -R_3 \, ,$$

$$P_1 = \left(X_{P1}, Y_{P1}\right) \text{ with } X_{P1} = \frac{d_1}{2} \, , \quad Y_{P1} = H - h_1 \, ,$$

$$P_2 = \left(X_{P2}, Y_{P2}\right) \text{ with } X_{P2} = \frac{t_1}{2} - R_3 \cdot \sin\alpha_2 \, , \quad Y_{P2} = R_3 \cdot \left(\cos\alpha_2 - 1\right) ,$$

$$P_3 = \left(X_{P3}, Y_{P3}\right) \text{ with } X_{P3} = \frac{t_1}{2} \, , \quad Y_{P3} = 0 \, ,$$

said equations being defined in a two-dimensional coordinate-system with the x-axis in the plane of the surface and with the y-axis through the center of the dimple and perpendicular to the surface.

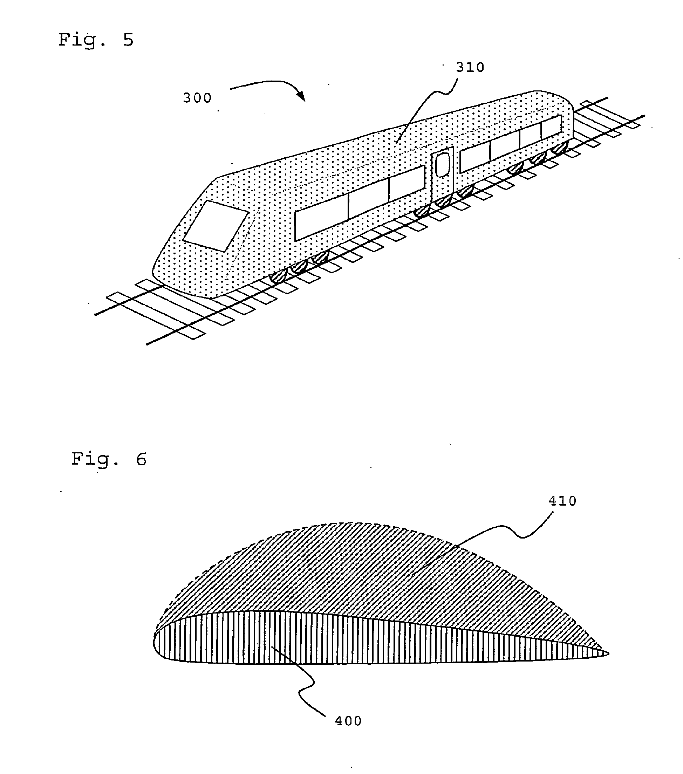

In Fig. 5 to 8 various preferred embodiments of the invention are shown, thereby demonstrating the broad range of applications, for which an inventive surface with dimples as described above can be utilized. The shown embodiments are only exemplary and do not limit the scope of the invention, as numerous other applications could be named.

In Fig. 5 a high-speed train 300 is shown schematically, which is provided with an inventive outer surface 310, which comprises a multitude of dimples, the form, size and distribution of which is adapted according to speed and geometry of the train 300.

A train as shown in Fig. 5 is characterized by improved flow properties in comparison to a similar train with a flat surface. In particular the forming of drag vortices is reduced as also the forming of lee wave in case of side winds. Consequently the overall friction resistance is also reduced.

A further effect of the inventive surface lies in the separation point of the flow being moved further downstream or in certain circumstances the complete disappearance of a separation point. This effect allows for instance for providing completely new wing profiles. In Fig. 6 a conventional wing profile 400 is shown in comparison with a modified wing profile 410, the use of which becomes possible for example as a wing of an airplane, when the surface is provided with an inventive dimple structure.

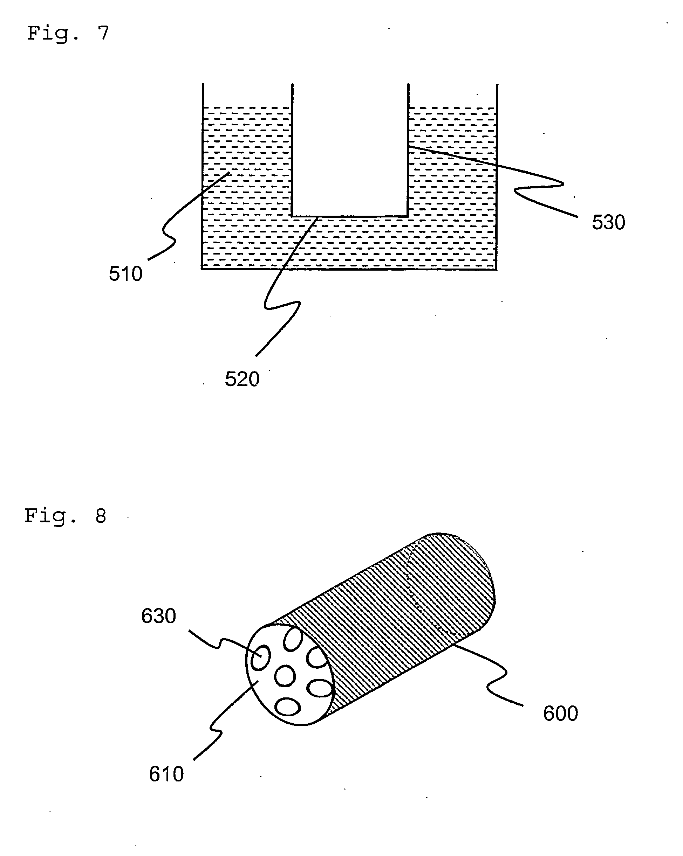

Fig. 7 shows a further utilization of an inventive surface for a container usable for cooking or for keeping some substance at a desired temperature. The container schematically shown in Fig. 7 is immersed in a flowing fluid 510. The outside surface of the bottom wall 520 of the container and/or the outside surface of the side walls 530 of the container comprise a surface with periodically arranged dimples.

In this embodiment the dimples are of the type shown in Fig. 1 and Fig. 2, preferably with the following values:

$t_1$ = 28.6 mm,
$t_2$ = 33.0 mm,
$d_c$ = 20.0 mm,
$h_c$ = 3.0 mm,
$R_{ahp}$ = 68.2 mm,
$R_s$ = 5.0 mm,

or scaled up or down keeping essentially the ratios

$$\frac{t_1}{t_2} = \frac{28.6}{33.0} \, , \qquad \frac{R_{ahp}}{R_S} = \frac{68.2}{3.0} \, , \qquad \frac{R_S}{h_c} = \frac{5.0}{3.0}$$

The above named values result in a fraction of the surface, which is covered by the dimples, of about 0.3.

Fig. 8 schematically shows a pipe 600, the inner surface 610 of which is provided with dimples 630. This pipe can be utilized as a transport channel for transportation of a medium. The significant improvement achieved by using the inventive surface in this embodiment lies in a reduced deposition of particles on the surface due to the suction of the boundary layer from the surface into the main flow by means of the self-organizing vortex flows originating in the dimples.

Furthermore, because of the same reasons the forming of ice on the surface is reduced, so that such a pipe can also be utilized with great advantage in a device, in which a medium is to be cooled, like an air-conditioning system, especially an air-conditioning system used in an airplane.

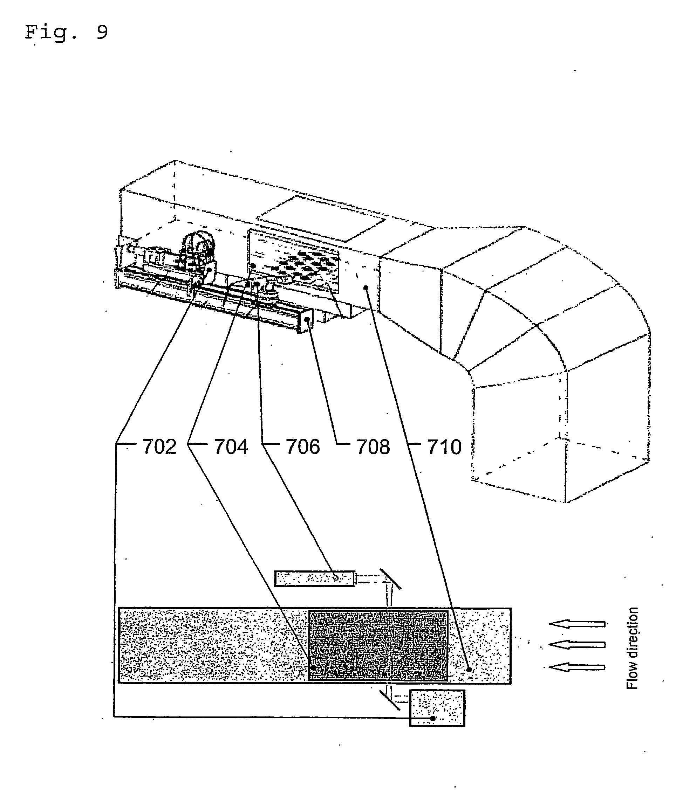

The inventors have studied the phenomenon of friction resistance reduction on the TLT-relief surfaces using a laser Doppler anemometer (LDA) to measure velocity profiles formed over the surfaces being flowed around, and the theorem of momentum to process the obtained results. The experimental setup is schematically illustrated in Fig. 9.

The investigated plate 704 is positioned in the test section 710 of the cavitation tunnel. By means of a laser 706 arranged on an optical bench 708 and a signal control and preliminary processing unit 702 as parts of the laser Doppler anemometer (LDA) the flow properties are measured.

The test specimens, which were examined by the inventors, were thin flat plates of the following two types:

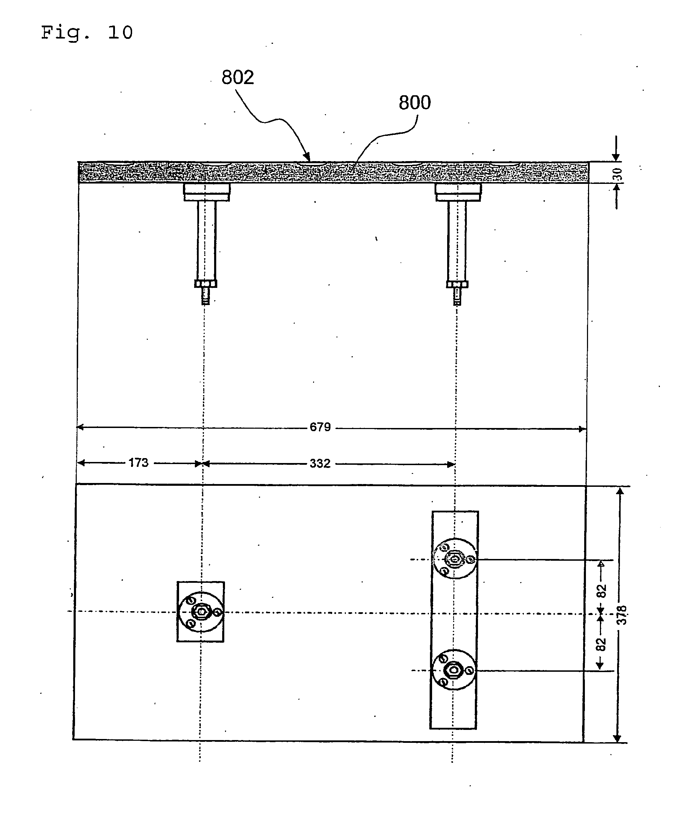

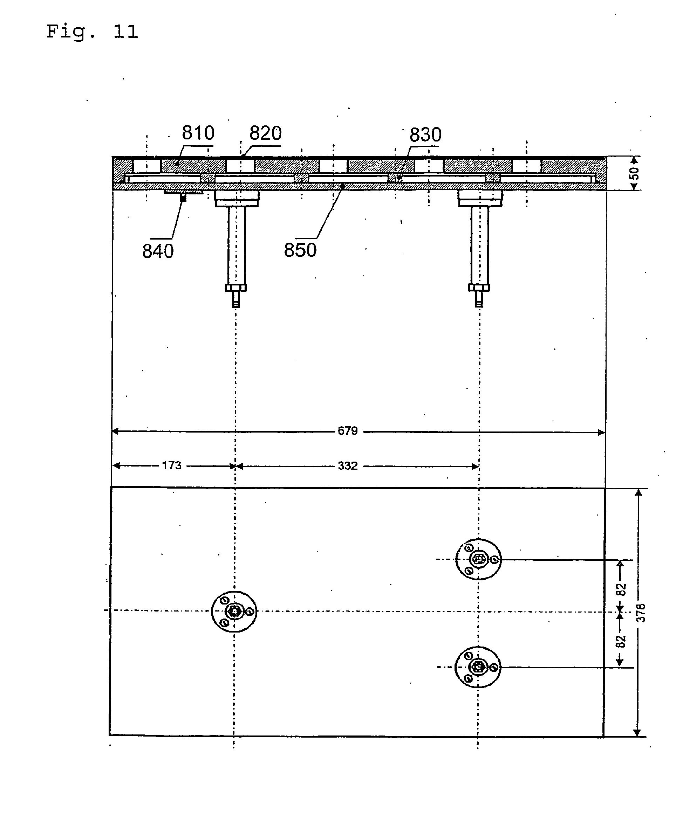

-   metal plates 800 of size 378 x 679 mm$^2$ either having a smooth surface or a TLT-relief formed surface provided with dimples 802 as shown in Fig. 10,
-   plates 810 of the same size with an elastic rubber coating 820 applied onto a flat plate with either a continuous surface or a surface provided with the regular grid of axially symmetrical holes connecting the elastic coating 820 above them with the pressure-tight chamber beneath the plate 810 as shown in Fig. 11.

By varying the pressure in the pressure-tight chamber, the experimentalist can form on the flowed-around surface the TLT relief with various depth of the concavities by retracting the elastic coating 820 inside the hole in the plate. When the pressure above and beneath the plate is the same, the surface being flowed around represents a grid of rubber membranes covering the holes in the plate and interacting with the ambient flow. Reducing the pressure beneath the plate, one can control the TLT relief with the depth of the relief concavities varying almost from zero to the depths corresponding to the radius of the hole in the support plate.

Fig. 11 further shows bearing cylinders 830, the vacuum cover 850, which seals the air-tight chamber and a vacuum union 840.

A similar arrangement as the one shown in Fig. 11 can also be used in a device or a vehicle to change the size, the form and/or the number of the dimples on the surface during operation of said device or vehicle. That way the flow properties of the device or vehicle can be flexibly adapted to changing operating conditions.

During the experiment performed by the inventors the hydrodynamic characteristics of the following objects were compared:

-   the TLT-relief metal plate with the smooth surface metal plate;
-   the adjustable elastic TLT-relief plate with the smooth plate with no holes on the support plate having the same elastic coating;
-   the plates with various TLT reliefs on the metal surface with the plates with membranes and different TLT reliefs on the elastic surface.

The measurements were carried out in a cavitational tunnel, which was the cavitational tunnel of the Hamburgische Schiffbau-Versuchsanstalt GmbH (HSVA), in which the flow was characterized by the Reynolds numbers defined as follows:

- along the plate length considering the preliminary section within the range:

$$9 \times 10^5 \leq Re \leq 7,5 \times 10^6 \ ;$$

- along the TLT relief concavity diameter within the range:

$$2.5 \times 10^4 \leq Re \leq 6 \times 10^5.$$

The onflowing stream turbulence rate was high and according to the laser measurements comprised:

$$0.1 \leq \sigma \approx \sqrt{(u'^2)}/u_\infty \leq 0.3$$

The water temperature in the flow was measured within the range:

$$15^\circ C \leq T \leq 22^\circ C.$$

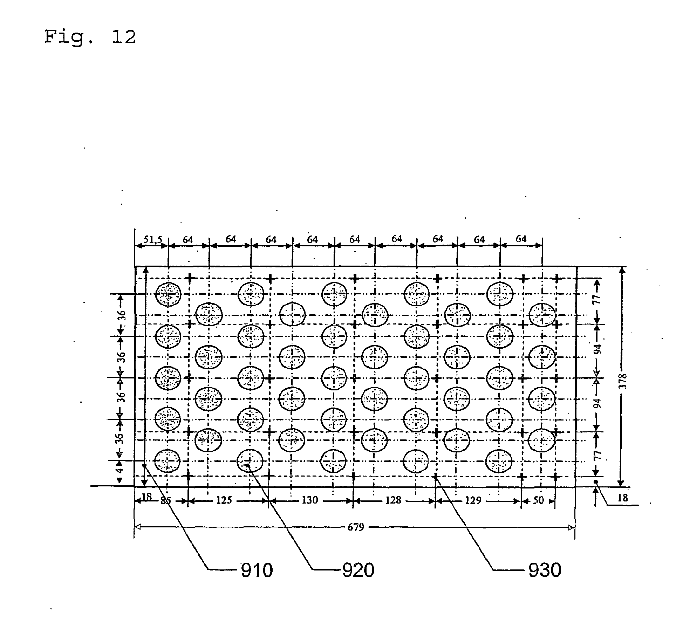

The velocity profiles were measured at thirty points 930 arranged on the surface of the plate 910 shown in Fig. 12. The profile speed measurements on the ambient surfaces of the flat plates and the plates with TLT relief comprising dimples 920 were performed at these points 930, which are indicated by crosses.

The measurements were processed using the theorem of momentum in accordance with the procedure suggested by I.Nikuradze in "Turbulente Reibungsschichten an der Platte", ZWB, R.Oldenbourg, Muenchen und Berlin, 1942, and comprised determination of the values of the local and full friction resistance coefficients $C_F'$ and $C_F$. The experimental data are represented in the table shown below.

It follows from the table that the friction resistance of the metallic surface with the TLT relief is - 22% lower than that of the smooth metallic surfaces. The friction resistance of the surface with elastic rough rubber coating and the TLT relief on it is - 34% lower than that of the smooth elastic rough rubber coated surface.

Table

| Plate name, type | Speed of undisturbed flow $U_\infty$ m/s | Reynolds number to length of the plate $Re=U_\infty \cdot l/\nu$ $10^{-6}$ | Temperature of plates ambiant fluid $T$ °C | Position data I. Section $X_1$ m | Position data II.section $X_2$ m | Displacement layer thickness I. section $\delta_1(x_1)$ $10^3$ m | Displacement layer thickness II.section $\delta_1(x_1)$ $10^3$ m | Loss of impulse I. section $\delta_2(x_1)$ $10^3$ m | Loss of impulse II.section $\delta_2(x_2)$ $10^3$ m | Formparametr $H_{12}=\delta_1(x)/\delta_2(x)$ | Local friction ratio $c'_f$ $10^3$ | Total friction ratio $C'_f$ $10^3$ |
|---|---|---|---|---|---|---|---|---|---|---|---|---|
| **Measurement on metal plates with smooth and formed streamlined surfaces** | | | | | | | | | | | | |
| $M_{sm}$ | 3 | 2,415 | ≈20 | 0,239 | 0,626 | 0,80 | 1,71 | 0,62 | 1,34 | ≈1,28 | 3,70 | 4,20 |
| $M_{sm}$ | 5 | 4,025 | | | | 0,72 | 1,53 | 0,56 | 1,19 | | 3,27 | 3,73 |
| $M_{sm}$ | 7 | 5,640 | | | | 0,67 | 1,43 | 0,52 | 1,12 | | 3,10 | 3,54 |
| $M_{TLT}$ 45 | 3 | 2,415 | ≈20 | 0,239 | 0,626 | 0,67 | 1,42 | 0,52 | 1,11 | ≈1,28 | 3,03 | 3,47 |
| $M_{TLT}$ 45 | 5 | 4,025 | | | | 0,60 | 1,27 | 0,47 | 0,99 | | 2,70 | 3,10 |
| $M_{TLT}$ 45 | 7 | 5,640 | | | | 0,56 | 1,18 | 0,44 | 0,92 | | 2,50 | 2,85 |
| **Measure results of the elastic, smooth and formed surface with rough rubber cover** | | | | | | | | | | | | |
| $E_{sm}$ | 3 | 2,415 | ≈20 | 0,239 | 0,626 | 1,01 | 2,14 | 0,80 | 1,69 | ≈1,27 | 4,63 | 5,30 |
| $E_{sm}$ | 5 | 4,025 | | | | 0,90 | 1,90 | 0,71 | 1,50 | | 4,08 | 4,67 |
| $E_{sm}$ | 7 | 5,640 | | | | 0,83 | 1,75 | 0,66 | 1,38 | | 3,74 | 4,28 |
| $E_{TLT}$ 45 | 3 | 2,415 | ≈20 | 0,239 | 0,626 | 0,78 | 1,63 | 0,61 | 1,28 | ≈1,27 | 3,76 | 3,95 |
| $E_{TLT}$ 45 | 5 | 4,025 | | | | 0,69 | 1,45 | 0,54 | 1,14 | | 3,10 | 3,53 |
| $E_{TLT}$ 45 | 7 | 5,640 | | | | 0,63 | 1,34 | 0,50 | 1,05 | | 2,87 | 3,27 |

9

**Claims**

1. Surface along which a medium flows, said medium consisting of a gas, a liquid, a two-phase mixture, or a mixture of multiple phases, wherein said surface comprises dimples, wherein the edges of said dimples are rounded, thereby forming a central dimple area and at least one curvature area for each dimple, which continuously connects the dimple to the surrounding surface,
**characterized in that** said curvature area comprises at least a first curvature area and a second curvature area, the first curvature area having a different curvature than the second curvature area.

2. Surface according to claim 1, wherein said central dimple area essentially has the form of a section of a sphere or an ellipsoid.

3. Surface according to claim 1 or 2, wherein
said first curvature area is rounded with a first rounding radius and said second curvature area is rounded with a second rounding radius.

4. Surface of claim 3, wherein
the central dimple area essentially has the form of a section of a sphere, and the form of the central dimple area, of the first curvature area and of the second curvature area in a cross section perpendicular to the surface and through the center of the dimple is defined by the following parameters:

$d_1$: Diameter of the central dimple area,
$d_2$: Outer diameter of the first curvature area,
$t_1$: Outer diameter of the second curvature area,
$R_1, C_1$: Radius and center point of the sphere, the section of which forms the surface of the central dimple area,
$R_2, C_2$: Radius and center point of the rounding radius of the first curvature area,
$R_3, C_3$: Radius and center point of the rounding radius of the second curvature area,
$P_1$: Transition point from the central dimple area to the first curvature area,
$P_2$: Transition point from the first curvature area to the second curvature area,
$P_3$: Transition point from the second curvature area to the surrounding surface,
H: Difference in height between the lowest point of the central dimple area and the outer rim of the second curvature area.
$h_1$: Difference in height between the lowest point of the central dimple area and the outer rim of the central dimple area,
$h_2$: Difference in height between the inner rim of the first curvature area and the outer rim of the first curvature area,
$h_3$: Difference in height between the inner rim of the second curvature area and the outer rim of the second curvature area,
$\alpha_1$: Angle between the y-axis and a line connecting $C_2$ and $C_3$,
$\alpha_2$: Angle between the x-axis and a line connecting $C_1$ and $C_2$,
f: Parameter related to the portion of the surface covered by the central dimple area in relation to the combined area of central dimple area and curvature areas,

wherein a set of parameters, in particular the parameters $d_1$, $\alpha_1$, $\alpha_2$, $R_2/R_1$ and f, are chosen and the remaining parameters are calculated by means of the following equations with a tolerance of $\pm$ 10% for each parameter:

$$R_1 = \frac{d_1}{2 \cdot \sin \alpha_1},$$

$$R_2 = \frac{R_2}{R_1} \cdot \frac{d_1}{2 \cdot \sin \alpha_1},$$

$$R_2 = \frac{t_1 - \frac{d_1}{2} \cdot \frac{R_2}{R_1} \cdot \frac{(1-\sin\alpha_1)}{\sin\alpha_2}}{\sin\alpha_2} \ ,$$

$$h_1 = \frac{d_1}{2} \cdot \frac{(1-\cos\alpha_1)}{\sin\alpha_1} \ ,$$

$$h_2 = R_2 \cdot (\cos\alpha_2 - \cos\alpha_1) \ ,$$

$$h_3 = R_3 \cdot (1-\cos\alpha_2) \ ,$$

$$H = h_1 + h_2 + h_3 \ ,$$

$$t_1 = \sqrt{\frac{\pi}{6 \cdot f}} \cdot d_1 \ ,$$

$$C_1 = (X_{C1}, Y_{C1}) \ \text{with} \ X_{C1} = 0 \ , \ Y_{C1} = R_1 - H \ ,$$

$$C_2 = (X_{C2}, Y_{C2}) \ \text{with} \ X_{C2} = \frac{d_1}{2} \cdot \left(1 + \frac{R_2}{R_1}\right) \ , \ Y_{C2} = R_3 + \frac{X_{C3} - X_{C2}}{tg\alpha_2} \ ,$$

$$C_3 = (X_{C3}, Y_{C3}) \ \text{with} \ X_{C3} = \frac{t_1}{2} \ , \ Y_{C3} = -R_3 \ ,$$

$$P_1 = (X_{P1}, Y_{P1}) \ \text{with} \ X_{P1} = \frac{d_1}{2} \ , \ Y_{P1} = H - h_1 \ ,$$

$$P_2 = (X_{P2}, Y_{P2}) \ \text{with} \ X_{P2} = \frac{t_1}{2} - R_3 \cdot \sin\alpha_2 \ , \ Y_{P2} = R_3 \cdot (\cos\alpha_2 - 1) \ ,$$

$$P_3 = \left( X_{P3}, Y_{P3} \right) \text{ with } X_{P3} = \frac{t_1}{2}, \quad Y_{P3} = 0,$$

said equations being defined in a two-dimensional coordinate-system with the x-axis in the plane of the surface and with the y-axis through the center of the dimple and perpendicular to the surface.

5. Surface according to any of the preceding claims, wherein said dimples are arranged periodically on said surface.

6. Surface according to any of the preceding claims, wherein the centers of three adjoining dimples form a triangle, the distance between two neighboring dimples having a constant value $t_1$ and the distance between two rows of dimples having a constant value $t_2$.

7. Surface according to claim 6, wherein the curvature areas of said three adjoining dimples are in contact with each other.

8. Surface according to claim 6 or 7, wherein additional dimples of a different size are provided, which are located in the center of three respective adjoining dimples.

9. Surface for reducing friction resistance along which a medium flows, said medium consisting of a gas, a liquid, a two-phase mixture, or a mixture of multiple phases, according to one of claims 1 to 8, wherein said surface comprises dimples having a diameter of d and a depth of h with a ratio between said depth and said diameter of $h/d \leq 0.1$.

10. Surface along which a medium flows for increasing heat transfer between said surface and said flowing medium, said medium consisting of a gas, a liquid, a two-phase mixture, or a mixture of multiple phases, according to one of claims 1 to 8, wherein said surface comprises dimples having a diameter of d and a depth of h with a ratio between said depth and said diameter of $h/d \geq 0.1$.

11. Means for locomotion with at least one surface, along which a medium flows when said means for locomotion is in movement, wherein the at least one surface is provided with dimples according to one of claims 1 to 10, in particular provided as a car, a truck, a train, an airplane, a helicopter or a ship.

12. Device for transportation of a medium, comprising at least one surface with dimples according to one of claims 1 to 10.

13. Device according to claim 12, comprising a transport channel, wherein the at least one surface with dimples is provided as the inner surface of said transport channel.

14. Device according to claim 13, wherein said transport channel is a pipe.

15. Device for heat exchange between a flowing medium and at least one surface of the device, wherein the at least one surface is provided with dimples according to one of claims 1 to 10, in particular provided as a part of an air-conditioning system.

16. Container for cooking and/or for keeping warm, **characterized in that** the outside surface of the bottom wall of the container and/or the outside surface of the side walls of the container comprise a surface with dimples according to one of claims 1 to 10.

17. Layer for applying on a surface, wherein said layer comprises a surface with dimples according to one of claims 1 to 10.

18. Layer according to claim 17, having a first side and a second side, **characterized in that** said first side comprises dimples according to one of claims 1 to 10 and said second side is self-adhesive.

19. Method for producing a surface with reduced friction resistance and/or improved heat exchange with a surrounding medium, comprising the step of

- applying a layer according to claim 17 or 18 onto said surface.

20. Method for producing a surface with reduced friction resistance and/or improved heat exchange with a surrounding medium, comprising the steps of

- providing a workpiece with at least one surface and
- imprinting into said at least one surface a structure comprising dimples, thereby generating a surface according to one of claims 1 to 10.

21. Method for producing a surface with reduced friction resistance and/or improved heat exchange with a surrounding medium, comprising the steps of

- providing a casting mold with at least one structured surface and
- molding, in particular injection molding, of a workpiece with at least one surface comprising dimples, thereby forming a surface according to one of claims 1 to 10, by means of said casting mold.

22. Usage of a surface according to one of claims 1 to 10 as a surface of

- a means for locomotion or
- a device for transportation of a medium or
- a device for heat exchange or
- a container for cooking and/or for keeping warm.

**Patentansprüche**

1. Oberfläche, an welcher entlang ein Medium strömt, wobei das Medium aus einem Gas, einer Flüssigkeit, einer Zwei-Phasen-Mischung oder einer Mischung aus mehreren Phasen besteht, wobei die Oberfläche Vertiefungen umfasst, wobei die Ränder der Vertiefungen abgerundet sind, wodurch ein zentraler Vertiefungsbereich und zumindest ein Krümmungsbereich für jede Vertiefung, welcher die Vertiefung kontinuierlich mit der umgebenden Oberfläche verbindet, gebildet ist,
**dadurch gekennzeichnet, dass**
der Krümmungsbereich zumindest einen ersten Krümmungsbereich und einen zweiten Krümmungsfläche umfasst, wobei der erste Krümmungsbereich eine andere Krümmung als der zweite Krümmungsbereich aufweist.

2. Oberfläche nach Anspruch 1, bei welcher der zentrale Vertiefungsbereich im Wesentlichen die Form eines Kugel- oder eines Ellipsoidausschnitts aufweist.

3. Oberfläche nach Anspruch 1 oder 2, bei welcher der erste Krümmungsbereich mit einem ersten Rundungsradius gerundet ist und der zweite Krümmungsbereich mit einem zweiten Rundungsradius gerundet ist.

4. Oberfläche nach Anspruch 3, bei welcher der zentrale Vertiefungsbereich im Wesentlichen die Form eines Kugelausschnitts aufweist und die Form des zentralen Vertiefungsbereichs, des ersten Krümmungsbereichs und des zweiten Krümmungsbereichs in einem senkrecht zu der Oberfläche und durch den Mittelpunkt der Vertiefung hindurch verlaufenden Querschnitt definiert ist durch die folgenden Parameter:

$d_1$: Durchmesser des zentralen Vertiefungsbereichs,
$d_2$: Außendurchmesser des ersten Krümmungsbereichs,
$t_1$: Außendurchmesser des zweiten Krümmungsbereichs,
$R_1$, $C_1$: Radius und Mittelpunkt der Kugel, deren Ausschnitt die Oberfläche des zentralen Vertiefungsbereichs bildet,
$R_2$, $C_2$: Radius und Mittelpunkt des Rundungsradius des ersten Krümmungsbereichs,
$R_3$, $C_3$: Radius und Mittelpunkt des Rundungsradius des zweiten Krümmungsbereichs,
$P_1$: Übergangspunkt von dem zentralen Vertiefungsbereich zu dem ersten Krümmungsbereich,
$P_2$: Übergangspunkt von dem ersten Krümmungsbereich zu dem zweiten Krümmungsbereich,
$P_3$: Übergangspunkt von dem zweiten Krümmungsbereich zu der umgebenden Oberfläche,
H: Höhendifferenz zwischen dem niedrigsten Punkt des zentralen Vertiefungsbereichs und dem Außenrand des zweiten Krümmungsbereichs,

$h_1$: Höhendifferenz zwischen dem niedrigsten Punkt des zentralen Vertiefungsbereichs und dem Außenrand des zentralen Vertiefungsbereichs,

$h_2$: Höhendifferenz zwischen dem Innenrand des ersten Krümmungsbereichs und dem Außenrand des ersten Krümmungsbereichs,

$h_3$: Höhendifferenz zwischen dem Innenrand des zweiten Krümmungsbereichs und dem Außenrand des zweiten Krümmungsbereichs,

$\alpha_1$: Winkel zwischen der y-Achse und einer Linie, welche $C_2$ und $C_3$ verbindet,

$\alpha_2$: Winkel zwischen der x-Achse und einer Linie, welche $C_1$ und $C_2$ verbindet,

f: Parameter, der sich auf den Anteil der durch den zentralen Vertiefungsbereich abgedeckten Oberfläche im Verhältnis zu der kombinierten Fläche aus dem zentralen Vertiefungsbereich und den Krümmungsbereichen bezieht,

wobei eine Menge von Parametern, insbesondere die Parameter $d_1$, $\alpha_1$, $\alpha_2$, $R_2/R_1$ und f, ausgewählt wird und die restlichen Parameter mit Hilfe der folgenden Gleichungen mit einer Toleranz von $\pm$ 10 % für jeden Parameter berechnet werden:

$$R_1 = \frac{d_1}{2 \cdot \sin\alpha_1} \, ,$$

$$R_2 = \frac{R_2}{R_1} \cdot \frac{d_1}{2 \cdot \sin\alpha_1} \, ,$$

$$R_2 = \frac{t_1 - \frac{d_1}{2} \cdot \frac{R_2}{R_1} \cdot \frac{(1 - \sin\alpha_1)}{\sin\alpha_2}}{\sin\alpha_2} \, ,$$

$$h_1 = \frac{d_1}{2} \cdot \frac{(1 - \cos\alpha_1)}{\sin\alpha_1} \, ,$$

$$h_2 = R_2 \cdot (\cos\alpha_2 - \cos\alpha_1) \, ,$$

$$h_3 = R_3 \cdot (1 - \cos\alpha_2) \, ,$$

$$H = h_1 + h_2 + h_3 \, ,$$

$$t_1 = \sqrt{\frac{\pi}{6 \cdot f}} \cdot d_1 \, ,$$

$$C_1 = (X_{C1}, Y_{C1}) \quad \text{mit} \quad X_{C1} = 0 \, , \quad Y_{C1} = R_1 - H \, ,$$

$$C_2 = \left(X_{C2}, Y_{C2}\right) \quad \text{mit} \quad X_{C2} = \frac{d_1}{2} \cdot \left(1 + \frac{R_2}{R_1}\right), \quad Y_{C2} = R_3 + \frac{X_{C3} - X_{C2}}{tg\,\alpha_2},$$

$$C_3 = \left(X_{C3}, Y_{C3}\right) \quad \text{mit} \quad X_{C3} = \frac{t_1}{2}, \quad Y_{C3} = -R_3,$$

$$P_1 = \left(X_{P1}, Y_{P1}\right) \quad \text{mit} \quad X_{P1} = \frac{d_1}{2}, \quad Y_{P1} = H - h_1,$$

$$P_2 = \left(X_{P2}, Y_{P2}\right) \quad \text{mit} \quad X_{P2} = \frac{t_1}{2} - R_3 \cdot \sin\alpha_2, \quad Y_{P2} = R_3 \cdot \left(\cos\alpha_2 - 1\right),$$

$$P_3 = \left(X_{P3}, Y_{P3}\right) \quad \text{mit} \quad X_{P3} = \frac{t_1}{2}, \quad Y_{P3} = 0,$$

wobei die Gleichungen in einem zweidimensionalen Koordinatensystem definiert sind, dessen x-Achse in der Ebene der Oberfläche liegt und dessen y-Achse sich durch den Mittelpunkt der Vertiefung hindurch und senkrecht zu der Oberfläche erstreckt.

5. Oberfläche nach einem der vorhergehenden Ansprüche, bei welcher die Vertiefungen periodisch auf der Oberfläche angeordnet sind.

6. Oberfläche nach einem der vorhergehenden Ansprüche, bei welcher die Mittelpunkte dreier benachbarter Vertiefungen ein Dreieck bilden, wobei der Abstand zwischen zwei benachbarten Vertiefungen einen konstanten Wert $t_1$ hat und der Abstand zwischen zwei Reihen von Vertiefungen einen konstanten Wert $t_2$ hat.

7. Oberfläche nach Anspruch 6, bei welcher die Krümmungsbereiche der drei benachbarten Vertiefungen in Kontakt miteinander stehen.

8. Oberfläche nach Anspruch 6 oder 7, bei welcher zusätzliche Vertiefungen mit einer anderen Größe vorhanden sind, welche im Mittelpunkt von jeweils drei benachbarten Vertiefungen angeordnet sind.

9. Oberfläche zur Reduzierung des Reibungswiderstands, entlang welcher ein Medium strömt, wobei das Medium aus einem Gas, einer Flüssigkeit, einer Zwei-Phasen-Mischung oder einer Mischung aus mehreren Phasen besteht, entsprechend einem der Ansprüche 1 bis 8, wobei die Oberfläche Vertiefungen mit einem Durchmesser d und einer Tiefe h aufweist, wobei ein Verhältnis zwischen der Tiefe und dem Durchmesser h/d ≤ 0,1 ist.

10. Oberfläche, entlang welcher ein Medium strömt, zum Erhöhen einer Wärmeübertragung zwischen der Oberfläche und dem strömenden Medium, wobei das Medium aus einem Gas, einer Flüssigkeit, einer Zwei-Phasen-Mischung oder einer Mischung aus mehreren Phasen besteht, entsprechend einem der Ansprüche 1 bis 8, wobei die Oberfläche Vertiefungen mit einem Durchmesser d und einer Tiefe h aufweist, wobei ein Verhältnis zwischen der Tiefe und dem Durchmesser h/d ≥ -0,1 ist.

11. Mittel zur Fortbewegung mit zumindest einer Oberfläche, entlang welcher ein Medium strömt, wenn sich das Fortbewegungsmittel in Bewegung befindet, wobei die zumindest eine Oberfläche Vertiefungen entsprechend einem der Ansprüche 1 bis 10 aufweist, wobei das Mittel insbesondere ein Auto, einen Lastkraftwagen, einen Zug, ein Flugzeug, einen Hubschrauber oder ein Schiff darstellt.

**12.** Vorrichtung zum Transport eines Mediums, welche zumindest eine Oberfläche mit Vertiefungen entsprechend einem der Ansprüche 1 bis 10 aufweist.

**13.** Vorrichtung nach Anspruch 12, welche einen Transportkanal umfasst, wobei die zumindest eine Oberfläche mit Vertiefungen als Innenseite des Transportkanals vorgesehen ist.

**14.** Vorrichtung nach Anspruch 13, wobei der Transportkanal ein Rohr darstellt.

**15.** Vorrichtung zum Wärmeaustausch zwischen einem strömenden Medium und zumindest einer Oberfläche der Vorrichtung, wobei die zumindest eine Oberfläche Vertiefungen entsprechend einem der Ansprüche 1 bis 10 aufweist, wobei sie insbesondere als Teil eines Luftkonditionierungssystems vorgesehen ist.

**16.** Behälter zum Garen und/oder zum Warmhalten, **dadurch gekennzeichnet, dass** die Außenseite der Bodenwand des Behälters und/oder die Außenseite der Seitenwände des Behälters eine Oberfläche mit Vertiefungen entsprechend einem der Ansprüche 1 bis 10 umfasst/umfassen.

**17.** Schicht zum Aufbringen auf eine Oberfläche, wobei die Schicht eine Oberfläche mit Vertiefungen entsprechend einem der Ansprüche 1 bis 10 umfasst.

**18.** Schicht nach Anspruch 17, welche eine erste Seite und eine zweite Seite aufweist, **dadurch gekennzeichnet, dass** die erste Seite Vertiefungen entsprechend einem der Ansprüche 1 bis 10 aufweist und die zweite Seite selbsthaftend ist.

**19.** Verfahren zur Herstellung einer Oberfläche mit verringertem Reibungswiderstand und/oder verbessertem Wärmeaustausch mit einem umgebenden Medium, welches den Schritt umfasst, eine Schicht entsprechend Anspruch 17 oder 18 auf der Oberfläche aufzubringen.

**20.** Verfahren zur Herstellung einer Oberfläche mit verringertem Reibungswiderstand und/oder verbessertem Wärmeaustausch mit einem umgebenden Medium, welches folgende Schritte umfasst:

Bereitstellen eines Werkstücks mit zumindest einer Oberfläche, und
Einprägen einer Struktur, welche Vertiefungen umfasst, in die zumindest eine Oberfläche und dadurch Erzeugen einer Oberfläche entsprechend einem der Ansprüche 1 bis 10.

**21.** Verfahren zur Herstellung einer Oberfläche mit verringertem Reibungswiderstand und/oder verbessertem Wärmeaustausch mit einem umgebenden Medium, welches folgende Schritte umfasst:

Bereitstellen einer Gussform mit zumindest einer strukturierten Oberfläche, und
Gießen, insbesondere Spritzgießen, eines Werkstücks mit zumindest einer Oberfläche, welche Vertiefungen umfasst, wodurch eine Oberfläche entsprechend einem der Ansprüche 1 bis 10 gebildet wird, mit Hilfe der Gussform.

**22.** Verwendung einer Oberfläche entsprechend einem der Ansprüche 1 bis 10 als Oberfläche für:

ein Mittel zur Fortbewegung oder
eine Vorrichtung zum Transport eines Mediums oder
eine Vorrichtung zum Wärmeaustausch oder
einen Behälter zum Garen und/oder zum Warmhalten.

**Revendications**

**1.** Surface le long de laquelle s'écoule un milieu, ledit milieu étant constitué d'un gaz, d'un liquide, d'un mélange de deux phases ou d'un mélange de phases multiples, ladite surface comportant des cuvettes, les bords desdites cuvettes étant arrondis, formant ainsi une zone centrale de cuvette et au moins une zone de courbure pour chaque cuvette, qui relie en continu la cuvette à la surface l'entourant,
**caractérisée en ce que** ladite zone de courbure comprend au moins une première zone de courbure et une seconde zone de courbure, la première zone de courbure ayant une courbure différente de celle de la seconde zone de courbure.

2. Surface selon la revendication 1, dans laquelle ladite zone centrale de cuvette a essentiellement la forme d'une section d'une sphère ou d'un ellipsoïde.

3. Surface selon la revendication 1 ou 2, dans laquelle ladite première zone de courbure est arrondie avec un premier rayon d'arrondi et ladite seconde zone de courbure est arrondie avec un second rayon d'arrondi.

4. Surface selon la revendication 3, dans laquelle la zone centrale de la cuvette a essentiellement la forme d'une section d'une sphère, et la forme de la zone centrale de la cuvette, de la première zone de courbure et de la seconde zone de courbure, en une section transversale perpendiculaire à la surface et passant par le centre de la cuvette, est définie par les paramètres suivants:

$d_1$: Diamètre de la zone centrale de la cuvette,
$d_2$: Diamètre extérieur de la première zone de courbure,
$t_1$: Diamètre extérieur de la seconde zone de courbure,
$R_1, C_1$: Rayon et point central de la sphère, dont la section forme la surface de la zone centrale de la cuvette,
$R_2, C_2$: Rayon et point central du rayon d'arrondi de la première zone de courbure,
$R_3, C_3$: Rayon et point central du rayon d'arrondi de la seconde zone de courbure,
$P_1$: Point de transition de la zone centrale de la cuvette à la première zone de courbure,
$P_2$: Point de transition de la première zone de courbure à la seconde zone de courbure,
$P_3$: Point de transition de la seconde zone de courbure à la surface entourante,
H: Différence de hauteur entre le point le plus bas de la zone centrale de la cuvette et le bord extérieur de la seconde zone de courbure,
$h_1$: Différence de hauteur entre le point le plus bas de la zone centrale de la cuvette et le bord extérieur de la zone centrale de la cuvette,
$h_2$: Différence de hauteur entre le bord intérieur de la première zone de courbure et le bord extérieur de la première zone de courbure,
$h_3$: Différence de hauteur entre le bord intérieur de la seconde zone de courbure et le bord extérieur de la seconde zone de courbure,
$\alpha_1$: Angle entre l'axe y et une ligne reliant $C_2$ et $C_3$,
$\alpha_2$: Angle entre l'axe x et une ligne reliant $C_1$ et $C_2$,
f: . Paramètre lié à la partie de la surface couverte par la zone centrale de la cuvette par rapport à l'étendue combinée de la zone centrale de la cuvette et des zones de courbure,

dans laquelle un ensemble de paramètres, en particulier les paramètres $d_1$, $\alpha_1$, $\alpha_2$, $R_2/R_1$ et f, sont choisis et les autres paramètres sont calculés au moyen des équations suivantes avec une tolérance de $\pm 10\%$ pour chaque paramètre:

Equations page 3

$$R_1 = \frac{d_1}{2 \cdot \sin\alpha_1},$$

$$R_2 = \frac{R_2}{R_1} \cdot \frac{d_1}{2 \cdot \sin\alpha_1},$$

$$R_3 = \frac{t_1 - \frac{d_1}{2} \cdot \frac{R_2}{R_1} \cdot \frac{(1-\sin\alpha_1)}{\sin\alpha_2}}{\sin\alpha_2},$$

$$h_1 = \frac{d_1}{2} \cdot \frac{(1 - \cos \alpha_1)}{\sin \alpha_1},$$

$$h_2 = R_2 \cdot (\cos \alpha_2 - \cos \alpha_1),$$

$$h_3 = R_3 \cdot (1 - \cos \alpha_2),$$

$$H = h_1 + h_2 + h_3,$$

$$t_1 = \sqrt{\frac{\pi}{6 \cdot f}} \cdot d_1,$$

$$C_1 = (X_{C1}, Y_{C1}) \text{ avec } X_{C1} = 0, \quad Y_{C1} = R_1 - H,$$

$$C_2 = (X_{C2}, Y_{C2}) \text{ avec } X_{C2} = \frac{d_1}{2} \cdot \left(1 + \frac{R_2}{R_1}\right), \quad Y_{C2} = R_3 + \frac{X_{C3} - X_{C2}}{tg\alpha_2},$$

$$C_3 = (X_{C3}, Y_{C3}) \text{ avec } X_{C3} = \frac{t_1}{2}, \quad Y_{C3} = -R_3,$$

$$P_1 = (X_{P1}, Y_{P1}) \text{ avec } X_{P1} = \frac{d_1}{2}, \quad Y_{P1} = H - h_1,$$

$$P_2 = (X_{P2}, Y_{P2}) \text{ avec } X_{P2} = \frac{t_1}{2} - R_3 \cdot \sin \alpha_2, \quad Y_{P2} = R_3 \cdot (\cos \alpha_2 - 1),$$

$$P_3 = (X_{P3}, Y_{P3}) \text{ avec } X_{P3} = \frac{t_1}{2}, \quad Y_{P3} = 0,$$

lesdites équations étant définies dans un système de coordonnées à deux dimensions avec l'axe x dans le plan de la surface et avec l'axe y passant par le centre de la cuvette et perpendiculaire à la surface.

5. Surface selon l'une quelconque des revendications précédentes, dans laquelle lesdites cuvettes sont agencées périodiquement sur ladite surface.

**6.** Surface selon l'une quelconque des revendications précédentes, dans laquelle les centres de trois cuvettes contiguës forment un triangle, la distance entre deux cuvettes voisines ayant une valeur constante $t_1$ et la distance entre deux rangées de cuvettes ayant une valeur constante $t_2$.

**7.** Surface selon la revendication 6, dans laquelle les zones de courbure desdites trois cuvettes contiguës sont en contact entre elles.

**8.** Surface selon la revendication 6 ou 7, dans laquelle des cuvettes supplémentaires d'une taille différente sont prévues, lesquelles sont situées dans le centre de trois cuvettes contiguës respectives.

**9.** Surface pour réduire la résistance de frottement le long de laquelle un milieu s'écoule, ledit milieu étant constitué d'un gaz, d'un liquide, d'un mélange de deux phases ou d'un mélange de phases multiples, selon l'une des revendications 1 à 8, dans laquelle
ladite surface comporte des cuvettes ayant un diamètre d et une profondeur h, avec un rapport entre ladite profondeur et ledit diamètre de h/d $\leq$ 0,1.

**10.** Surface le long de laquelle un milieu s'écoule pour augmenter une transmission de chaleur entre ladite surface et ledit milieu en écoulement, ledit milieu étant constitué d'un gaz, d'un liquide, d'un mélange de deux phases ou d'un mélange de phases multiples, selon l'une des revendications 1 à 8, dans laquelle
ladite surface comporte des cuvettes ayant un diamètre d et une profondeur h, avec un rapport entre ladite profondeur et ledit diamètre de h/d $\geq$ 0,1.

**11.** Moyen de locomotion ayant au moins une surface, le long de laquelle un milieu s'écoule lorsque ledit moyen de locomotion est en mouvement, dans lequel la, au moins une, surface est pourvue de cuvettes selon l'une des revendications 1 à 10, en particulier prévu sous la forme d'une automobile, d'un camion, d'un train, d'un avion, d'un hélicoptère ou d'un navire.

**12.** Dispositif pour le transport d'un milieu, comportant au moins une surface ayant des cuvettes selon l'une des revendications 1 à 10.

**13.** Dispositif selon la revendication 12, comportant un canal de transport, dans lequel la, au moins une, surface pourvue de cuvettes est prévue en tant que la surface intérieure dudit canal de transport.

**14.** Dispositif selon la revendication 13, dans lequel ledit canal de transport est une conduite.

**15.** Dispositif pour échanger de la chaleur entre un milieu en écoulement et au moins une surface du dispositif, dans lequel la, au moins une, surface est pourvue de cuvettes selon l'une des revendications 1 à 10, en particulier prévue en tant que partie d'un système de climatisation.

**16.** Récipient pour cuisson et/ou pour conserver au chaud, **caractérisé en ce que** la surface extérieure de la paroi du fond du récipient et/ou la surface extérieure des parois latérales du récipient comprennent une surface ayant des cuvettes selon l'une des revendications 1 à 10.

**17.** Couche destinée à être appliquée sur une surface, ladite couche comportant une surface ayant des cuvettes selon l'une des revendications 1 à 10.

**18.** Couche selon la revendication 17, ayant un premier côté et un second côté, **caractérisée en ce que** ledit premier côté comporte des cuvettes selon l'une des revendications 1 à 10 et ledit second côté est autocollant.

**19.** Procédé pour produire une surface ayant une résistance de frottement réduite et/ou un échange de chaleur amélioré avec un milieu environnant, comprenant l'étape qui consiste

- à appliquer une couche selon la revendication 17 ou 18 sur ladite surface.

**20.** Procédé pour la production d'une surface ayant une résistance de frottement réduite et/ou un échange de chaleur amélioré avec un milieu environnant, comprenant les étapes qui consistent:

- à pourvoir une pièce d'au moins une surface et

- à imprimer dans ladite, au moins une, surface, une structure comportant des cuvettes, générant ainsi une surface selon l'une des revendications 1 à 10.

21. Procédé pour la production d'une surface ayant une résistance de frottement réduite et/ou un échange de chaleur amélioré avec un milieu environnant, comprenant les étapes qui consistent

- à pourvoir un moule de coulée d'au moins une surface structurée et

à mouler, en particulier à mouler par injection, une pièce ayant au moins une surface comportant des cuvettes, de manière à former une surface selon l'une des revendications 1 à 10, au moyen dudit moule de coulée.

22. Utilisation d'une surface selon l'une des revendications 1 à 10 en tant que surface de

- un moyen de locomotion ou
- un dispositif pour le transport d'un milieu ou
- un dispositif pour un échange de chaleur ou
- un récipient pour la cuisson et/ou maintenir au chaud.

Fig. 1

Fig. 2

Fig. 3

# Fig. 4

Fig. 5

Fig. 6

Fig. 7

510

520

530

Fig. 8

630

610

600

Fig. 9

702    704    706    708    710

Flow direction

Fig. 10

Fig. 11

Fig. 12

910  920  930

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 92911873 A
- RU 9200106 W
- EP 96927047 A
- EP 9603200 W
- US 5064199 A